# FASCICULE DE BREVET EUROPEEN

(11) **EP 0 857 189 B1**
(45) Date de publication et mention de la délivrance du brevet: **10.12.2003**
(21) Numéro de dépôt: 96934943.0
(22) Date de dépôt: 21.10.1996
(51) Int. Cl.: C08K 5/06, C08L 57/00, C09D 5/02, C04B 40/00

(54) **COMPOSITION PULVERULENTE REDISPERSABLE DANS L'EAU DE POLYMERES FILMOGENES**
IN WASSER REDISPERCIERBARE PULVERZUSAMMENSETZUNG AUS FILMBILDENDEN POLYMEREN
WATER-REDISPERSIBLE POWDERED FILM-FORMING POLYMER COMPOSITION

(30) Priorité: 25.10.1995 FR 9512589
(43) Date de publication de la demande: 12.08.1998
(73) Titulaire: RHODIA CHIMIE, 92408 Courbevoie Cédex (FR)
(72) Inventeur: GUERIN, Gilles, F-95600 Eaubonne (FR); MORVAN, Mikel, F-92400 Courbevoie (FR); COLOMBET, Jean-François, F-92500 Rueil-Malmaison (FR)
(74) Mandataire: Dubruc, Philippe
(86) Numéro de dépôt international: FR9601640
(87) Numéro de publication internationale: WO97015616

(56) Documents cités:
- EP-A- 0 332 016
- WO-A-94/05896
- ASTM Spec. Tech. Publ. (1993), STP 1176 (POLYMER-MODIFIED HYDRAULIC-CEMENT MIXTURES), pp 44-62. R.P. RANDALL et al.: "The influence of various polymeric XP000574588

## Description

La présente invention a pour objet des poudres redispersables dans l'eau de polymères filmogènes préparés à partir de monomères à insaturation éthylénique, leur procédé de préparation et leur utilisation.

On connait déjà des poudres redispersables obtenues par pulvérisation et séchage de dispersions de polymères filmogènes acryliques, et surtout de dispersions de polymères d'esters vinyliques.

Les polymères filmogènes préparés à partir de monomères à insaturation éthylénique sont utilisés fréquemment comme adjuvants dans les compositions de liants minéraux hydrauliques pour en améliorer la mise en oeuvre et les propriétés après durcissement telles que l'adhésion sur divers substrats, l'étanchéité, la souplesse, les propriétés mécaniques.

Les poudres redispersables présentent l'avantage par rapport aux dispersions aqueuses de pouvoir être prémélangées avec le ciment sous forme de compositions pulvérulentes prêtes à l'emploi utilisables par exemple pour la fabrication de mortiers et bétons destinés à être accrochés sur des matériaux de construction, ou pour la fabrication de mortiers-colles ou pour la réalisation d'enduits de protection et de décoration à l'intérieur ou à l'extérieur des bâtiments.

Pour parvenir à obtenir des poudres ne s'agglomérant pas au cours du stockage sous l'effet de la pression et de la température et convenablement redispersables dans l'eau, on a coutume de leur adjoindre des quantités relativement importantes de substances inertes et de colloides protecteurs.

Ainsi, il a déjà été proposé d'ajouter aux dispersions, avant pulvérisation, des produits de condensation mélamine-formaldéhyde-sulfonate (US-A-3784648) ou naphtalène-formaldéhyde-sulfonate (DE-A-3143070) et/ou des copolymères vinylpyrrolidone-acétate de vinyl (EP-078449).

Le brevet français FR-A-2 245 723 vise une préparation séchée par congélation, stable et dispersable dans l'eau contenant une poudre d'un latex de polymère et un agent dispersant hydrosoluble qui est un saccharide.

Le but de la présente invention est de proposer une nouvelle composition pulvérulente redispersable totalement ou presque totalement dans l'eau, qui soit à base d'un polymère filmogène préparé à partir de monomères à insaturation éthylénique.

Un autre but de la présente invention est de proposer une poudre redispersable du type ci-dessus qui soit stable au stockage sans agglomération.

Un autre but de la présente invention est de proposer un procédé de préparation des poudres de type ci-dessus à partir de latex de polymère filmogène.

Un autre but de la présente invention est de proposer une poudre redispersable du type ci-dessus qui, sous forme de poudre ou après éventuelle redispersion dans l'eau sous forme de pseudo latex, soit utilisable dans tous les domaines d'application des latex pour réaliser des revêtement (notamment peintures, composition de couchage du papier) ou des compositions adhésives (notamment adhésifs sensibles à la pression, colles carrelage).

Un autre but de la présente invention est de proposer une poudre redispersable du type ci-dessus (ou le pseudo-latex en découlant) plus particulièrement en vue de son utilisation comme additifs à des liants hydrauliques du type mortiers ou bétons.

Ces buts et d'autres sont atteints par la présente invention qui concerne en effet une composition pulvérulente redispersable dans l'eau comprenant :
- une poudre d'au moins un polymère filmogène insoluble dans l'eau et préparé à partir d'au moins un monomère à insaturation éthylénique,
- au moins un tensio-actif non ionique choisi parmi les dérivés pofyoxyatkylénés.
- au moins un composé hydrosoluble choisi parmi les polyélectrolytes appartenant à la famille des polyacides faibles.

L'invention a de même pour objet un procédé de préparation de telles compositions consistant à :
- éliminer l'eau d'un émulsion aqueuse constituée dudit polymère filmogène insoluble dans l'eau préparé par polymérisation en émulsion aqueuse et comportant au moins un tensio-actif non ionique, au moins un composé hydrosoluble et éventuellement au moins un tensio-actif supplémentaire ou un agent anti-mottant,
- et pulvériser le résidu sec en une poudre de granulométrie désirée.

Les compositions selon l'invention présentent l'avantage de se redisperser spontanément dans l'eau, pour donner à nouveau une émulsion présentant une granulométrie voisine de celle de l'émulsion initiale.

D'autres avantages et caractéristiques de l'invention apparaîtront plus clairement à la lecture de la description et des exemples qui vont suivre.

L'invention concerne tout d'abord une composition pulvérulente redispersable dans l'eau comprenant :
- une poudre d'au moins un polymère filmogène insoluble dans l'eau et préparé à partir d'au moins un monomère à insaturation éthylénique,
- au moins un tensio-actif non ionique choisi parmi les dérivés polyoxyalkylénés,
- au moins un composé hydrosoluble choisi parmi les polyélectrolytes appartenant à la famille des polyacides faibles.

Les polymères filmogène insolubles dans l'eau sont préparés à partir de monomères à insaturation éthylénique, notamment de type vinylique et/ou acrylate.

Les polymères filmogènes insolubles dans l'eau sont de préférence des homopolymères vinylique ou acrylate, ou des copolymères acétate de vinyle, styrène/butadiène, styrène/acrylate, acrylate et styrène/butadiène/acrylate.

Les polymères filmogènes ont de préférence une température de transition vitreuse comprise entre environ -20°C et +50°C, de préférence entre 0°C et 40°C. Ces polymères peuvent être préparés de manière connue en soi par polymérisation en émulsion de monomères à insaturation éthylénique à l'aide d'amorceurs de polymérisation et en présence d'agents émulsifiants et/ou dispersants usuels. La teneur en polymère dans l'émulsion se situe généralement entre 30 et 70% en poids, plus spécifiquement entre 35 et 65% en poids.

A titre de monomères, on peut citer les esters vinyliques et plus particulièrement l'acétate de vinyle ; les acrylates et méthacrylates d'alkyle dont le groupe alkyle contient de 1 à 10 atomes de carbone par exemple les acrylates et méthacrylates de méthyle, éthyle, n-butyte, 2-ethylhexyle ; les monomères vinylaromatiques en particulier le styrène. Ces monomères peuvent être copolymérisés entre eux ou avec d'autres monomères à insaturation éthylénique.

A titre d'exemples non limitatifs de monomères copolymérisables avec l'acétate de vinyle et/ou les esters acryliques et/ou le styrène on peut citer l'éthylène et les oléfines comme l'isobutène ; les esters vinyliques d'acides monocarboxyliques saturés, ramifiés ou non, ayant de 1 à 12 atomes de carbone, comme le propionate, le "versatate" (marque déposée pour les esters d'acides ramifiés en C₉-C₁₁), le pivalate, le laurate de vinyle ; les esters d'acides insaturés mono- ou di-carboxyliques possédant 3 à 6 atomes de carbone avec les alcanols possédant 1 à 10 atomes de carbone, comme les maléates, fumarates de méthyle, d'éthyle, de butyle, d'éthylhexyle ; les monomères vinylaromatiques tels que les méthylstyrènes, les vinyltoluènes ; les halogénures de vinyle tels que le chlorure de vinyle, le chlorure de vinylidène, les diolefines particulièrement le butadiène.

La polymérisation en émulsion des monomères est mise en oeuvre en présence d'un émulsifiant et d'un initiateur de polymérisation.

Les monomères mis en oeuvre peuvent être introduits en mélange ou séparément et simultanément dans le milieu réactionnel, soit avant le début de la polymérisation en une seule fois, soit au cours de la polymérisation par fractions successives ou en continu.

En tant qu'agent émulsifiant, on met en oeuvre généralement les agents anioniques classiques représentés notamment par les sels d'acides gras, les alkylsulfates, les alkylsulfonates, les alkylarylsulfates, les alkylarylsulfonates, les arylsulfates, les arylsulfonates, les sulfosuccinates, les alkylphosphates de métaux alcalins, les sels de l'acide abiétique hydrogénés ou non. Ils sont employés à raison de 0.01 à 5% en poids par rapport au poids total des monomères.

L'initiateur de polymérisation en émulsion, qui est hydrosoluble, est représenté plus particulièrement par les hydroperoxydes tels que l'eau oxygénée, l'hydroperoxyde de cumène, l'hydroperoxyde de diisopropylbenzène, l'hydropéroxyde de paramenthane, et par les persulfates tels que le persulfate de sodium, le persulfate de potassium, le persulfate d'ammonium. Il est employé en quantités comprises entre 0,05 et 2% en poids par rapport au total des monomères. Ces initiateurs sont éventuellement associés à un réducteur, tel que le bisulfite ou le formaldéhydesulfoxylate de sodium, les polyéthylèneamines, les sucres : dextrose, saccharose, les sels métalliques. Les quantités de réducteur utilisés varient de 0 à 3% en poids par rapport au poids total des monomères.

La température de réaction, fonction de l'initiateur mis en oeuvre, est généralement comprise entre 0 et 100°C, et de préférence, entre 30 et 70°C.

On peut utiliser un agent de transfert dans des proportions allant de 0 à 3% en poids par rapport au(x) monomère(s), généralement choisi parmi les mercaptans tels que le N-dodécylmercaptan, le tertiododécylmercaptan ; le cyclohexène ; les hydrocarbures halogénés tels que le chloroforme, le bromoforme, le tétrachlorure de carbone, Il permet de régler la proportion de polymère greffé et la longueur des chaînes moléculaires greffées. Il est ajouté au milieu réactionnel soit avant la polymérisation, soit en cours de polymérisation.

Selon un mode préféré de l'invention, le polymère filmogène de la composition selon l'invention présente une surface faiblement carboxylée et donc un taux d'acidité de surface faible.

Ainsi, il présente de préférence un taux d'acidité de surface d'au plus 100 microéquivalent de fonction -COOH par gramme de polymère, de préférence d'au plus 50 microéquivalent de fonction -COOH par gramme de polymère.

Les compositions pulvérulentes selon l'invention comprennent en outre au moins un tensio-actif non ionique choisi parmi les dérivés polyoxyalkylénés.

Plus particulièrement, on peut citer :
- les alcools gras éthoxylés ou éthoxy-propoxylés
- les triglycérides éthoxylés ou éthoxy-propoxylés
- les acides gras éthoxylés ou éthoxy-propoxylés
- les esters de sorbitan éthoxylés ou éthoxy-propoxylés
- les amines grasses éthoxylées ou éthoxy-propoxylées
- les di(phényl-1 éthyl) phénols éthoxylés ou éthoxy-propoxylés
- les tri(phényl-1 éthyl) phénols éthoxylés ou éthoxy-propoxylés
- les alkyls phénols éthoxylés ou éthoxy-propoxylés

Le nombre de motifs oxyéthylène (OE) et/ou oxypropylène (OP) de ces tensio-actifs non ioniques varie habituellement de 2 à 100 selon la HLB (balance hydrophilie/lipophilie) souhaitée. Plus particulièrement, le nombre de motifs OE et/ou OP se situe entre 2 et 50. De préférence, le nombre de motifs OE et/ou OP est compris entre 10 et 50.

Les alcools gras éthoxylés ou éthoxy-propoxylés comprennent généralement de 6 à 22 atomes de carbone, les motifs OE et OP étant exclus de ces nombres. De préférence, ces motifs sont des motifs éthoxylés.

Les triglycérides éthoxylés ou éthoxy-propoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de poisson, l'huile de palme, l'huile de pépin de raisin, l'huile de soja, l'huile de ricin, l'huile de colza, l'huile de coprah, l'huile de noix de coco) et sont de préférence éthoxylés.

Les acides gras éthoxylés ou éthoxy-propoxylés sont des esters d'acide gras (tels que par exemple l'acide oléique, l'acide stéarique), et sont de préférence éthoxylés.

Les esters de sorbitan éthoxylés ou éthoxy-propoxylés sont des esters du sorbitol cyclisés d'acide gras comprenant de 10 à 20 atomes de carbone comme l'acide laurique, l'acide stéarique ou l'acide oléique, et sont de préférence éthoxylés.

Le terme triglycéride éthoxylé vise dans la présente invention, aussi bien les produits obtenus par éthoxytation d'un triglycéride par l'oxyde d'éthylène que ceux obtenus par transestérification d'un triglycéride par un polyéthylèneglycol.

De même, le terme acide gras éthoxylé inclue aussi bien les produits obtenus pas éthoxylation d'un acide gras par l'oxyde d'éthylène que ceux obtenus par transestérification d'un acide gras par un polyéthylèneglycol.

Les amines grasses éthoxylés ou éthoxy-propoxylés ont généralement de 10 à 22 atomes de carbone, les motifs OE et OP étant exclus de ces nombres, et sont de préférence éthoxylés.

Les alkylphénols éthoxylés ou éthoxy-propoxylé sont généralement 1 ou 2 groupes alkyles, linéaires ou ramifiés, ayant 4 à 12 atomes de carbone. A titre d'exemple on peut citer notamment les groupes octyles, nonyles ou dodécyles.

A titre d'exemples de tensio-actifs non ioniques du groupe des alkylphénols éthoxy ou éthoxy-propoxylés, des di(phényl-1 éthyl) phénols éthoxylés et des tri(phényl-1 éthyl) phénols éthoxy ou éthoxy-propoxylés, on peut citer notamment le di(phényl-1 éthyl)phénol éthoxylé avec 5 motifs OE, le di(phényl-1 éthyl)phénol éthoxylé avec 10 motifs OE, le tri(phényl-1 éthyl)phénol éthoxylé avec 16 motifs OE, le tri(phényl-1 éthyl)phénol éthoxylé avec 20 motifs OE, le tri(phényl-1 éthyl)phénol éthoxylé avec 25 motifs OE, le tri(phényl-1 éthyl)phénol éthoxylé avec 40 motifs OE, les tri(phényl-1 éthyl)phénols éthoxy-propoxylés avec 25 motifs OE + OP, le nonylphénol éthoxylé avec 2 motifs OE, le nonylphénol éthoxylé avec 4 motifs OE, le nonylphénol éthoxylé avec 6 motifs OE, le nonylphénol éthoxylé avec 9 motifs OE, les nonylphénols éthoxy-propoxylés avec 25 motifs OE + OP, les nonylphénols éthoxy-propoxylés avec 30 motifs OE + OP, les nonylphénols éthoxy-propoxylés avec 40 motifs OE + OP, les nonylphénols éthoxy-propoxylés avec 55 motifs OE + OP, les nonylphénols éthoxy-propoxylés avec 80 motifs OE + OP.

Les compositions pulvérulentes selon l'invention comprennent en outre au moins un composé hydrosoluble choisi parmi les polyélectrolytes appartenant à la famille des polyacides faibles.

Par polyacide faible, on entend des polyacides présentant un pKa compris entre 3 et 6.

Plus particulièrement, ce composé est un solide.

Selon un mode de réalisation particulier de l'invention, ce composé hydrosoluble est choisi parmi les polyélectrolytes de nature organique issus de la polymérisation de monomères qui ont la formule générale suivante : 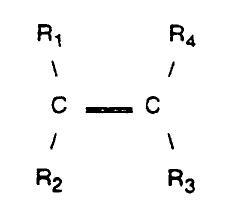 formule dans laquelle Rᵢ, identiques ou différents représentent H, CH₃, CO₂H, (CH₂)ₙ CO₂H avec n = 0 à 4.

A titre d'exemples non limitatifs, on peut citer les acides acrylique, métacrylique, maléique, fumarique, itaconique, crotonique.

Conviennent également à l'invention, les copolymères obtenus à partir des monomères répondant à la formule générale précédente et ceux obtenus à l'aide de ces monomères et d'autres monomères, en particulier les dérivés vinyliques comme les alcools vinyliques et les vinyl amides telle que la vinytpyrrolidinone. On peut également citer les copolymères obtenus à partir d'alkyle vinyl éther et d'acide maléique ainsi que ceux obtenus à partir de vinyl styrène et d'acide maléique qui sont notamment décrits dans l'encyclopédie KIRK-OTHMER intitulé "ENCYCLOPEDIA OF CHEMICAL TECHNOLOGY" - Volume 18 - 3 ème édition - Wiley interscience publication - 1982.

Conviennent également à l'invention les polymères peptidiques dérivés de la polycondensation d'acides aminés, notamment de l'acide aspartique et glutamique ou des précurseurs des diaminodiacides. Ces polymères peuvent être aussi bien des homopolymères dérivés de l'acide aspartique ou glutamique que des copolymères dérivés de l'acide aspartique et de l'acide glutamique en proportions quelconques, ou des copolymères dérivés de l'acide aspartique et / ou glutamique et d'aminoacides autres. Parmi les aminoacides copolymérisables, on peut citer la glycine, l'alanine, la leucine, l'isoleucine, la phényl alanine, la méthionine, l'histidine, la proline, la lysine, la sérine, la thréonine, la cystéine, ...

Les polyélectrolytes préférés présentent un degré de polymérisation faible.

La masse moléculaire en poids des polyélectrolytes est plus particulièrement inférieure à 20000 g/mole. De préférence, elle est comprise entre 1000 et 5000 g/mole.

Bien entendu, il est tout à fait envisageable d'utiliser ces différents types de composés hydrosolubles en combinaison.

Les compositions pulvérulentes de la présente invention peuvent contenir en outre un tensio-actif supplémentaire ionique.

Les tensio-actifs supplémentaires ioniques peuvent plus particulièrement être des agents tensio-actifs amphotères, les alkyl-bétaines, les alkyldiméthytbétaines, les alkylamidopropylbétaines, les alkylamido-propyldiméthylbétaines, les alkyltriméthyl-sulfobétaines, les dérivés d'imidazoline tels que les alkylamphoacétates, alkylamphodiacétates, alkylampho-propionates, alkyl-amphodipropionates, les alkylsultaines ou les alkylamidopropyl-hydroxysultaines, les produits de condensation d'acides gras et d'hydrolysats de protéines, les dérivés amphotères des alkylpolyamines comme l'Amphionic XL® commercialisé par Rhône-Poulenc, Ampholac 7T/X® et Ampholac 7C/X® commercialisés par Berol Nobel.

Les compositions selon l'invention peuvent en outre comprendre au moins un agent tensio-actif supplémentaire anionique. Ainsi on peut utiliser des sels hydrosolubles d'alkylsulfates, d'alkyléthersulfates, les alkyliséthionates et les alkyltaurates ou leurs sels, les alkylcarboxylates, les alkylsulfosuccinates ou les alkylsuccinamates, les alkylsarcosinates, les dérivés alkylés d'hydrolysats de protéines, les acylaspartates, les phosphates esters d'acte et/ou d'alkyléther et/ou d'alkylaryléther.

Le cation est en général un métal alcalin ou alcalino-terreux, tels que le sodium, le potassium, le lithium, le magnésium, ou un groupement ammonium NR₄⁺ avec R, identiques ou différents, représentant un radical alkyle substitué ou non par un atome d'oxygène ou d'azote.

Il est possible d'ajouter à la composition pulvérulente selon l'invention, tout additif classique selon le domaine d'application desdites compositions.

Dans les compositions pulvérulentes selon l'invention, la teneur en poudre de polymère filmogéne est comprise, de manière avantageuse, entre 40 et 90 parties en poids dans la composition pulvérulente. Selon un mode de réalisation particulier de l'invention, la teneur en poudre de polymère filmogéne est d'au moins 70 parties en poids.

La quantité de tensio-actif non ionique varie en général entre 0,2 et 30 parties en poids dans la composition pulvérulente. De préférence, cette teneur est comprise entre 1 et 20 parties en poids, encore plus préférentiellement entre 2 et 10 parties

La quantité de composé hydrosoluble varie en général entre 7 et 50 parties en poids dans la composition pulvérulente. Selon une variante particulière, cette quantité est comprise entre 8 et 25 parties en poids.

Le rapport pondéral des concentrations entre le tensio-actif non ionique et le composé hydrosoluble, est compris en général entre 30 / 70 et 10 / 90.

Dans le cas où la composition pulvérulente de l'invention comprend au moins un tensio-actif supplémentaire, le rapport pondéral des concentrations entre le tensio-actif non ionique et le ou les tensio-actifs supplémentaires, est compris en général entre 5 et 10.

La composition selon l'invention peut comprendre en outre au moins une charge minérale présentant une granulométrie inférieure à 10 µm environ, de préférence inférieure à 3 µm.

Comme charge minérale, on recommande d'utiliser une charge choisie notamment parmi le carbonate de calcium, le kaolin, le sulfate de baryum, l'oxyde de titane, le talc, l'alumine hydratée, la bentonite et le sullfoaluminate de calcium (blanc satin), la silice.

La présence de ces charges minérales favorise la préparation de la poudre et sa stabilité au stockage en évitant l'aggrégation de la poudre, c'est-à-dire son mottage.

On peut ajouter cette charge minérale directement à la composition pulvérulente ou elle peut être issue du procédé de préparation de la composition. La quantité de charge minérale peut être comprise entre 0,5 et 60, de préférence de 10 et 20 parties en poids, pour 100 parties de poudre de polymère filmogène insoluble dans l'eau.

Les compositions pulvérulentes obtenues sont stables au stockage ; elles peuvent être aisément redispersées dans l'eau sous forme de pseudo-latex et utilisées directement sous forme de poudre ou sous forme de pseudo-latex dans tous les domaines d'application connus des latex.

Le procédé de préparation de la composition pulvérulente va maintenant être décrit.

Comme indiqué précédemment, le procédé consiste à :
- éliminer l'eau d'une émulsion aqueuse constituée d'un polymère filmogène insoluble dans l'eau préparé par polymérisation en émulsion aqueuse et comportant au moins un tensio-actif non ionique, au moins un composé hydrosoluble et éventuellement au moins un tensio-actif supplémentaire ou un agent anti-mottant,
- et à pulvériser le résidu sec en une poudre de granulométrie désirée.

Bien évidemment, dans le cas où des additifs classiques sont utilisés, on peut les ajouter lors de la formation de l'émulsion.

On part d'une émulsion aqueuse de la poudre de polymère filmogène insoluble dans l'eau obtenue par polymérisation en émulsion telle que définie précédemment. Ce type d'émulsion est communément appelée latex.

On ajoute à cette émulsion aqueuse les autres composants de la composition pulvérulente : tensio-actif non ionique, composé hydrosoluble, éventuellement le tensio-actif supplémentaire et/ou l'agent anti-mottant. Les teneurs respectives des divers constituants sont choisies de telle sorte que les compositions pulvérulentes séchées présentent la composition définie auparavant. De préférence, on part d'une émulsion présentant un extrait sec (polymère filmogène + tensio-actif non ionique + composé hydrosoluble + tensio-actif supplémentaire + agent anti-mottant) compris entre 10 et 70 % en poids, encore plus préférentiellement entre 40 et 60 %.

L'eau de cette émulsion est ensuite éliminée et le produit obtenu pulvérisé pour obtenir une poudre. Les étapes d'élimination de l'eau de l'émulsion de latex et d'obtention d'une poudre peuvent être séparées ou concomitantes. Ainsi, on peut utiliser un procédé de congélation, suivie d'une étape de sublimation, ou de lyophilisation, de séchage ou de séchage par atomisation (pulvérisation - séchage).

Le séchage par atomisation est le procédé préféré car il permet d'obtenir directement la poudre à la granulométrie désirée sans passer nécessairement par l'étape de broyage. La granulométrie de la poudre est généralement inférieure à 500 µm.

Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence comprise entre 100 et 115°C et la température de sortie est de préférence comprise entre 55 et 65°C.

La charge minérale peut être ajoutée à l'émulsion aqueuse de poiymère de départ. Tout ou partie de la charge minérale peut également être introduite lors de l'étape de pulvérisation dans le procédé de séchage par atomisation. Il est possible enfin d'ajouter la charge minérale directement à la composition pulvérulente finale.

Dans la plupart des cas, les compositions pulvérulentes selon l'invention sont totalement redispersables dans l'eau à température ambiante par simple agitation. Par totalement redispersables, on entend une poudre conforme à l'invention qui après addition d'une quantité adaptée d'eau permet d'obtenir un pseudo-latex dont la granulométrie des particules est sensiblement identique à la granulométrie des particules de latex présentes dans l'émulsion de départ.

L'invention conceme également le pseudo-latex obtenu par redispersion dans l'eau d'une composition pulvérulente telle que définie précédemment.

Enfin, l'invention concerne l'utilisation des compositions pulvérulentes décrites ci-dessus dans l'industrie du bâtiment comme additifs aux mélanges de liants minéraux hydrauliques pour la réalisation d'enduits de protection et de décoration, des mortiers-colles et des ciments-colles destinés à la pose de carrelages et de revêtements de sols. Elles s'avèrent particulièrement bien adaptées à la préparation de produits en poudre prêts à l'emploi à base de ciment ainsi que de plâtre.

Les compositions pulvérulentes de l'invention ou les pseudo-latex en dérivant sont utilisables en outre dans tous les autres domaines d'application des latex, plus particulièrement dans le domaine des adhésifs, du couchage du papier et des peintures. Les compositions pulvérulentes selon l'invention peuvent comporter en outre les additifs usuels, en particulier des biocides, des microbiostats, des bactériostatiques, et des anti-mousses silicones et organiques.

Les exemples suivants illustrent l'invention sans toutefois en limiter la portée.

### EXEMPLES

### Exemple 1

Dans un mélangeur, on prépare l'émulsion suivante :

| Composition | % en poids |
|---|---|
| latex styrène/butadiène (*) | 80 |
| nonyl phénol éthoxylé avec 10 motifs OE (**) | 1,2 |
| acide polyacrylique (**) (Mw = 2000) | 8,8 |
| eau | 10 |

| | |
|---|---|
| (*) le latex styrène/butadiène présente un extrait sec de 50 % en poids. Il est obtenu par polymérisation en émulsion d'un mélange pondéral de 58 % de styrène et 42 % de butadiène. La granulométrie moyenne des particules de polymère mesurée à l'aide d'un granulomètre BROOKHAVEN® est de 0,12 µm. Sa surface est faiblement carboxylée : il présente une charge de surface égale à 30 microéquivalents de fonction -COOH / g de polymère. | |
| (**) Le nonyl phénol éthoxylé est commercialisé par Rhône-Poulenc sous le nom de Soprophor® BC10. (***) L'acide polyacrylique est commercialisé par la société Aldrich. | |

1 kg de cette émulsion est atomisé dans les conditions standards d'une colonne d'atomisation type NIRO® (115°C en entrée et 60°C en sortie). L'émulsion est coatomisée en présence d'une dispersion de kaolin de telles sorte que la quantité de kaolin dans le produit final est de 12 % en poids. Le produit final se présente sous la forme d'une poudre coulable formée de particules plutôt sphériques présentant les caractéristiques suivantes :
- la taille des particules est comprise entre 10 et 100 µm,
- l'extrait sec de la poudre est de 99 %.
- la comaosition en poids de la poudre sèche est la suivante :

| | |
|---|---|
| latex styrène/butadiène | 70 % |
| nonyl phénol éthoxylé | 2 % |
| acide polyacrylique | 15 % |
| kaolin | 12% |
| eau | 1 % |

Le produit atomisé se redisperse de manière spontanée dans l'eau à température ambiante. La taille moyenne des particules de l'émulsion obtenue, mesurée à l'aide d'un granulomètre BROOKHAVEN®, est de 0,13 µm.

### EXEMPLE 2

Dans un mélangeur, on prépare l'émulsion suivante :

| Composition | % en poids |
|---|---|
| latex styrène/butadiène | 80 |
| nonyl phénol éthoxylé avec 30 motifs OE (*) | 1,2 |
| acide polyacrylique (Mw = 2000) | 8,8 |
| eau | 10 |

| | |
|---|---|
| (*) Le nonyl phénol éthoxylé est commercialisé par Rhône-Poulenc. Les autres constituants sont les mêmes que dans l'exemple 1. | |

Ce mélange est atomisé à raide d'un dispositif BUCHI® avec une température d'entrée de 110°C et une température de sortie de 70°C.

La poudre obtenue après atomisation présente une dispersion spontanée dans l'eau. Le pseudo-latex obtenu présente une granulométrie identique à celle du latex de départ.

### EXEMPLE 3

Dans un mélangeur, on prépare l'émulsion suivante :

| Composition | % en poids |
|---|---|
| latex styrène/butadiène | 80 |
| nonyl phénol éthoxylé avec 10 motifs OE | 1,2 |
| acide polyacrylique (*)(Mw = 5000) | 17,6 |
| eau | 1,2 |

| | |
|---|---|
| (*) L'acide polyacrylique est commercialisé par la société Aldrich et est en solution à 50 % poids dans de l'eau. Les autres constituants sont les mêmes que dans l'exemple 1. | |

Ce mélange est atomisé à l'aide d'un dispositif BUCHI® avec une température d'entrée de 110°C et une température de sortie de 70°C.

La poudre obtenue après atomisation présente une dispersion spontanée dans l'eau. Le pseudo-latex obtenu présente une granulométrie identique à celle du latex de départ.

### EXEMPLE 4

Dans un mélangeur, on prépare la composition suivante :

| Composition | % en poids |
|---|---|
| latex styrène/butadiène | 80 |
| nonyl phénol éthoxylé avec 10 motifs OE | 1,2 |
| acide polyitaconique (*) (Mw = 2000) | 8,8 |
| eau | 10 |

| | |
|---|---|
| (*) L'acide polyitaconique est commercialisé par la société Rhône-Poulenc. Les autres constituants sont les mêmes que dans l'exemple 1. | |

Ce mélange est atomisé de la même manière que dans l'exemple 1. On obtient une poudre qui se redisperse spontanément dans l'eau. Le pseudo-latex obtenu présente une granulométrie moyenne équivalente à celle du latex de départ.

## Revendications

1. Composition pulvérulente redispersable dans l'eau **caractérisée en ce qu'**elle comprend :
- une poudre d'au moins un polymère filmogène insoluble dans l'eau et préparé à partir d'au moins un monomère à insaturation éthylénique,
- au moins un tensio-actif non ionique choisi parmi les dérivés polyoxyalkylériés,
- au moins un composé hydrosoluble choisi parmi les polyélectrolytes appartenant à la famille des polyacides présentant un pKa compris entre 3 et 6.

2. Composition pulvérulente selon la revendication précédente **caractérisée en ce que** le polymère filmogène insoluble dans l'eau est choisi parmi les homopolymères vinylique ou acrylate, ou les copolymères acétate de vinyle, styrène/butadiène, styrène/acrylate, acrylate et styrène/butadiène/acrylate.

3. Composition pulvérulente selon l'une quelconque des revendications 1 ou 2, **caractérisée en ce que** le polymère filmogène insoluble dans l'eau présente un taux d'acidité de surface d'au plus 100 microéquivalents de fonction -COOH par gramme de polymère.

4. Composition pulvérulente selon l'une quelconque des revendications 1 à 3, **caractérisée en ce que** le tensio-actif non ionique est choisi parmi :
- les alcools gras éthoxylés ou éthoxy-propoxylés
- les triglycérides éthoxylés ou éthoxy-propoxylés
- les acides gras éthoxylés ou éthoxy-propoxylés
- les esters de sorbitan éthoxylés ou éthoxy-propoxylés
- les amines grasses éthoxylées ou éthoxy-propoxylées
- les di(phényl-1 éthyl) phénols éthoxylés ou éthoxy-propoxylés
- les tri(phényl-1 éthyl) phénols éthoxylés ou éthoxy-propoxylés
- les alkyls phénols éthoxylés ou éthoxy-propoxylés

5. Composition pulvérulente selon l'une quelconque des revendications 1 à 4, **caractérisée en ce que** le composé hydrosoluble est choisi parmi les polyélectrolytes, appartenant à la famille des polyacides présentant un pKa compris entre 3 et 6, de nature organique issus de la polymérisation de monomères qui ont la formule générale suivante : 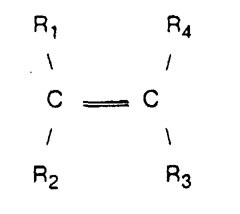 avec Rᵢ, identiques ou différents, représentant H ou CH₃ ou CO₂H ou (CH₂)ₙ CO₂H avec n = 0 à 4.

6. Composition pulvérulente selon la revendication précédente, **caractérisée en ce que** les polyélectrolytes présentent une masse moléculaire en poids inférieure à 20000 g/mole.

7. Composition pulvérulente selon l'une quelconque des revendications précédentes, **caractérisée en ce qu'**ils peuvent comprendre en outre au moins un tensio-actif supplémentaire ionique.

8. Composition pulvérulente selon l'une quelconque des revendications précédentes, **caractérisée en ce que** la teneur en poudre de polymère filmogène est comprise entre 40 à 90 parties en poids pour 100 parties en poids de la composition pulvérulente.

9. Composition pulvérulente selon l'une quelconque des revendications précédentes, **caractérisée en ce que** la quantité de tensio-actif non ionique varie entre 1 et 20 parties en poids pour 100 parties en poids de la composition pulvérulente.

10. Composition pulvérulente selon l'une quelconque des revendications précédentes, **caractérisée en ce que** la quantité de composé hydrosoluble varie entre 7 et 50 parties en poids pour 100 parties en poids de la composition pulvérulente.

11. Composition pulvérulente selon l'une quelconque des revendications 7 à 10, **caractérisée en ce que** le rapport pondéral des concentrations entre le tensio-actif non ionique et le ou les tensio-actifs supplémentaires est compris entre 5 et 10.

12. Composition pulvérulente selon l'une quelconque des revendications précédentes, **caractérisée en ce que** le rapport pondéral des concentrations entre le tensio-actif non ionique et le composé hydrosoluble est compris entre 30 / 70 et 10 / 90.

13. Composition pulvérulente selon l'une quelconque des revendications précédentes, **caractérisée en ce qu'**elle comprend en outre une charge minérale en poudre de granulométrie inférieure à 10 µm, de préférence inférieure à 3 µm.

14. Procédé de préparation de la composition pulvérulente telle que définie à l'une quelconque des revendications 1 à 13, **caractérisé en ce que** :
- on élimine l'eau d'une émulsion aqueuse constituée d'un polymère filmogène insoluble dans l'eau préparé par polymérisation en émulsion aqueuse et comportant au moins un tensio-actif non ionique, au moins un composé hydrosoluble et éventuellement au moins un tensio-actif supplémentaire ou un agent anti-mottant,
- et on pulvérise le résidu sec en une poudre de granulométrie désirée.

15. Procédé selon la revendication précédente, **caractérisé en ce que** l'émulsion aqueuse présente un extrait sec compris entre 30 et 70 % en poids.

16. Procédé selon l'une quelconque des revendications 14 ou 15, **caractérisé en ce que** le procédé choisi est le procédé par séchage/pulvérisation.

17. Procédé selon la revendication précédente, **caractérisé en ce que** tout ou partie de la charge minérale est ajoutée à l'étape de pulvérisation.

18. Pseudo-latex obtenu par redispersion dans l'eau de la composition pulvérulente telle que définie à l'une quelconque des revendications 1 à 13.

19. Utilisation des pseudo-latex définis à la revendication 18 et des compositions pulvérulentes telles que définies aux revendications 1 à 13, comme additifs à des liants hydrauliques, des adhésifs, des compositions de couchage du papier et des peintures.

## Patentansprüche

1. In Wasser redispergierbare pulverförmige Zusammensetzung, **dadurch gekennzeichnet, daß** sie umfaßt:
- ein Pulver mindestens eines in Wasser unlöslichen, filmbildenden Polymers, hergestellt ausgehend von mindestens einem ethylenisch ungesättigten Monomer,
- mindestens ein nichtionisches Tensid, ausgewählt aus Polyoxyalkylenderivaten,
- mindestens eine wasserlösliche Verbindung, ausgewählt aus Polyelektrolyten aus der Familie von Polysäuren mit einem pKₐ-Wert von 3 bis 6.

2. Pulverförmige Zusammensetzung nach dem vorangehenden Anspruch, **dadurch gekennzeichnet, daß** das in Wasser unlösliche, filmbildende Polymer ausgewählt ist aus Vinyl- oder Acrylat-Homopolymeren oder Vinylacetat-, Styrol/Butadien-, Styrol/Acrylat, Acrylat- und Styrol/Butadien/Acrylat-Copolymeren.

3. Pulverförmige Zusammensetzung nach einem der Ansprüche 1 oder 2, **dadurch gekennzeichnet, daß** das in Wasser unlösliche, filmbildende Polymer einen Oberflächenaciditätsgrad von höchstens 100 Mikroäquivalenten COOH-Funktionen pro Gramm Polymer aufweist

4. Pulverförmige Zusammensetzung nach einem der Ansprüche 1 bis 3, **dadurch gekennzeichnet, daß** das nichtionische Tensid ausgewählt aus:
- ethoxylierten oder ethoxypropoxylierten Fettalkoholen,
- ethoxylierten oder ethoxypropoxylierten Triglyceriden,
- ethoxylierten oder ethoxypropoxylierten Fettsäuren,
- ethoxylierten oder ethoxypropoxylierten Sorbitanestern,
- ethoxylierten oder ethoxypropoxylierten Fettaminen,
- ethoxylierten oder ethoxypropoxylierten Di-(1-ethylphenyl)-phenolen,
- ethoxylierten oder ethoxypropoxylierten Tri-(1-ethylphenyl)-phenolen,
- ethoxylierten oder ethoxypropoxylierten Alkylphenolen

5. Pulverförmige Zusammensetzung nach einem der Ansprüche 1 bis 4, **dadurch gekennzeichnet, daß** die wasserlösliche Verbindung ausgewählt ist aus Polyelektrolyten organischer Natur aus der Familie von Polysäuren mit einem pKₐ-Wert von 3 bis 6, die aus der Polymerisation von Monomeren stammen, welche die folgende allgemeine Formel besitzen: 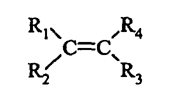 wobei Rᵢ, identisch oder verschieden, jeweils Wasserstoff oder CH₃ oder CO₂H oder (CH₂)ₙCO₂H mit n = 0 bis 4 darstellen.

6. Pulverförmige Zusammensetzung nach dem vorangehenden Anspruch, **dadurch gekennzeichnet, daß** die Polyelektrolyte eine gewichtsmittlere Molekularmasse von weniger als 20.000 g/mol besitzen.

7. Pulverförmige Zusammensetzung nach einem der vorangehenden Ansprüche, **dadurch gekennzeichnet, daß** sie außerdem mindestens ein zusätzliches ionisches Tensid umfassen kann.

8. Pulverförmige Zusammensetzung nach einem der vorangehenden Ansprüche, **dadurch gekennzeichnet, daß** der Gehalt an Pulver des filmbildenden Polymers 40 bis 90 Gewichtsteile auf 100 Gewichtsteile der pulverförmigen Zusammensetzung beträgt.

9. Pulverförmige Zusammensetzung nach einem der vorangehenden Ansprüche, **dadurch gekennzeichnet, daß** die Menge an nichtionischem Tensid von 1 bis 20 Gewichtsteilen auf 100 Gewichtsteile der pulverförmigen Zusammensetzung variiert.

10. Pulverförmige Zusammensetzung nach einem der vorangehenden Ansprüche, **dadurch gekennzeichnet, daß** die Menge an wasserlöslicher Verbindung von 7 bis 50 Gewichtsteilen auf 100 Gewichtsteile der pulverförmigen Zusammensetzung variiert.

11. Pulverförmige Zusammensetzung nach einem der Ansprüche 7 bis 10, **dadurch gekennzeichnet, daß** das gewichtsbezogene Verhältnis der Konzentrationen zwischen dem nichtionischen Tensid und dem oder den zusätzlichen Tensiden 5 bis 10 beträgt.

12. Pulverförmige Zusammensetzung nach einem der vorangehenden Ansprüche, **dadurch gekennzeichnet, daß** das Gewichtsverhältnis der Konzentrationen zwischen nichtionischem Tensid und wasserlöslicher Verbindung 30/70 bis 10/90 beträgt.

13. Pulverförmige Zusammensetzung nach einem der vorangehenden Ansprüche, **dadurch gekennzeichnet, daß** sie außerdem einen pulverförmigen mineralischen (anorganischen) Füllstoff mit einer Granulometrie bzw. Teilchengröße von weniger als 10 µm, vorzugsweise weniger als 3 µm, umfaßt.

14. Verfahren zur Herstellung einer pulverförmigen Zusammensetzung, wie in einem der Ansprüche 1 bis 13 definiert, **dadurch gekennzeichnet,**
- **daß** man das Wasser einer wäßrigen Emulsion, die aus einem in Wasser unlöslichen, filmbildenden Polymer, das hergestellt ist durch wäßrige Emulsionspolymerisation, besteht und mindestens ein nichtionisches Tensid, mindestens eine wasserlösliche Verbindung und gegebenenfalls mindestens ein zusätzliches Tensid oder ein klumpenbildungsverhinderndes Mittel umfaßt, entfernt und
- **daß** man den trockenen Rückstand zu einem Pulver mit gewünschter Granulometrie bzw. Teilchengröße pulverisiert bzw. zerkleinert.

15. Verfahren nach dem vorangehenden Anspruch, **dadurch gekennzeichnet, daß** die wäßrige Emulsion einen Trockenextrakt von 30 bis 70 Gew.-% aufweist.

16. Verfahren nach einem der Ansprüche 14 oder 15, **dadurch gekennzeichnet, daß** das Verfahren ausgewählt ist aus Verfahren mittels Trocknung/Pulverisierung.

17. Verfahren nach dem vorangehenden Anspruch, **dadurch gekennzeichnet, daß** der mineralische Füllstoff insgesamt oder teilweise im Verfahrensschritt der Pulverisierung hinzugegeben wird.

18. Pseudolatex, erhalten durch Redispergieren einer pulverförmigen Zusammensetzung, wie in einem der Ansprüche 1 bis 13 definiert, in Wasser.

19. Verwendung von Pseudolatices, wie in Anspruch 18 definiert, und von pulverförmigen Zusammensetzungen, wie in den Ansprüchen 1 bis 13 definiert, als Additive für hydraulische Bindemittel, Klebstoffe, Beschichtungszusammensetzungen für Papier und Farben.

## Claims

1. A water-redispersible powdery composition, **characterized in that** it comprises:
• a powder of at least one film-forming, water-insoluble polymer prepared from at least one monomer containing an ethylenically unsaturated bond;
• at least one non-ionic surfactant selected from polyoxyalkyenated derivatives;
• at least one hydrosoluble compound selected from polyelectrolytes from the family of polybasic acids with a pKₐ in the range 3 to 6.

2. A powdery composition according to the preceding claim, **characterized in that** the film-forming, water-insoluble polymer is selected from vinyl or acrylate homopolymers or from vinyl acetate, styrene/butadiene, styrene/acrylate, acrylate and styrene/butadiene/acrylate copolymers.

3. A powdery composition according to claim 1 or claim 2, **characterized in that** the film-forming, water-insoluble polymer has a surface acidity of at most 100 microequivalents of the -COOH function per gram of polymer.

4. A powdery composition according to any one of claims 1 to 3, **characterized in that** the non-ionic surfactant is selected from:
• ethoxylated or ethoxy-propoxylated fatty alcohols;
• ethoxylated or ethoxy-propoxylated triglycerides;
• ethoxylated or ethoxy-propoxylated fatty acids;
• ethoxylated or ethoxy-propoxylated sorbitan esters;
• ethoxylated or ethoxy-propoxylated fatty amines;
• ethoxylated or ethoxy-propoxylated di(1-phenylethyl) phenols;
• ethoxylated or ethoxy-propoxylated di(1-phenylethyl) phenols;
• ethoxylated or ethoxy-propoxylated alkyl phenols.

5. A powdery composition according to any one of claims 1 to 4, **characterized in that** the hydrosoluble compound is selected from polyelectrolytes from the family of polybasic acids with a pKₐ in the range 3 to 6, of an organic nature derived from polymerizing monomers with the following general formula: 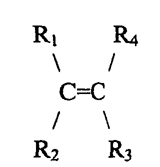 in which Rᵢ, which may be identical or different, represents H, CH₃, CO₂H or (CH₂)ₙCO₂H, in which n = 0 to 4.

6. A powdery composition according to the preceding claim, **characterized in that** the polyelectrolytes have a mass average molecular mass of less than 20000 g/mole.

7. A powdery composition according to any one of the preceding claims, **characterized in that** they may further comprise at least one supplemental ionic surfactant.

8. A powdery composition according to any one of the preceding claims, **characterized in that** the amount of film-forming polymer powder is in the range 40 to 90 parts by weight per 100 parts by weight of powdery composition.

9. A powdery composition according to any one of the preceding claims, **characterized in that** the quantity of non-ionic surfactant is in the range 1 to 20 parts by weight per 100 parts by weight of powdery composition.

10. A powdery composition according to any one of the preceding claims, **characterized in that** the quantity of water-soluble compound is in the range 7 to 50 parts by weight per 100 parts by weight of powdery composition.

11. A powdery composition according to any one of claims 7 to 10, **characterized in that** the concentration weight ratio between the non-ionic surfactant and the supplemental surfactant or surfactants is in the range 5 to 10.

12. A powdery composition according to any one of the preceding claims, **characterized in that** the concentration weight ratio between the non-ionic surfactant and the hydrosoluble compound is in the range 30/70 to 10/90.

13. A powdery composition according to any one of the preceding claims, **characterized in that** it further comprises a powder mineral filler with a granulometry of less than 10 µm, preferably less than 3 µm.

14. A process for preparing a powdery composition as defined in any one of claims 1 to 13, **characterized in that**:
• water is eliminated from an aqueous emulsion constituted by a film-forming, water-insoluble polymer prepared by aqueous emulsion polymerization and comprising at least one non-ionic surfactant, at least one hydrosoluble compound and optionally at least one supplemental surfactant or anticaking agent;
• and spraying the dry residue to a powder with the desired granulometry.

15. A process according to the preceding claim, **characterized in that** the aqueous emulsion has a dry extract in the range 30% to 70% by weight.

16. A process according to claim 14 or claim 15, **characterized in that** the selected process is a spray drying process.

17. A process according to the preceding claim, **characterized in that** all or a portion of the mineral filler is added during the spraying step.

18. A pseudo-latex obtained by redispersing the powdery composition as defined in any one of claims 1 to 13 in water.

19. Use of pseudo-latexes defined in claim 18 and powdery compositions as defined in claims 1 to 13 as additives for hydraulic binders, adhesives, paper coating compositions and paints.
